(19) Europäisches Patentamt
European Patent Office
Office européen des brevets

(11) **EP 2 562 534 A2**

(12) **EUROPEAN PATENT APPLICATION**

(43) Date of publication:
**27.02.2013 Bulletin 2013/09**

(51) Int Cl.:
***G01N 23/18*** *(2006.01)*

(21) Application number: **12175905.4**

(22) Date of filing: **11.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.08.2011 JP 2011181812**
**05.09.2011 JP 2011193098**
**14.09.2011 JP 2011200983**

(71) Applicant: **Sumitomo Rubber Industries, Ltd.**
**Hyogo-ken (JP)**

(72) Inventors:
• **Ito, Wakana**
**Kobe-shi, Hyogo 651-0072 (JP)**
• **Naito, Masato**
**Kobe-shi, Hyogo 651-0072 (JP)**

(74) Representative: **Manitz, Finsterwald & Partner GbR**
**Martin-Greif-Strasse 1**
**80336 München (DE)**

(54) **Method for analyzing rubber compound with filler particles**

(57) A method for analyzing rubber compound including a rubber component and filler particles, comprises: a STEM image acquiring step in which, by the use of a scanning transmission electron microscope (STEM), data of STEM images of the rubber compound are acquired; and a researching step for researching the STEM images or secondary information based on the original data of STEM images; wherein in the STEM image acquiring step, the focal point of the scanning transmission electron microscope is set in a thickness center region of a specimen of the rubber compound.

**FIG.2**

start

using scanning transmission electron microscope, STEM image data of rubber compound are acquired — S1

based on STEM image data, dataset of 3D structure of rubber compound is reconstructed — S2

based on dataset of 3D structure, slice image data of rubber compound are reconstructed — S3

based on slice image data, first finite element model of rubber compound is generated — S41

subdivision region is determined in first finite element model — S42 } S4

each regular element in subdivision regeon is divided into two or more elements — S43

using finite element model, deformation simulation is carried out — S5

end

EP 2 562 534 A2

**Description**

**Background of the invention**

**Field of the invention**

The present invention relates to a method for analyzing rubber compound with filler particles, more particularly to a method in which the dispersion of filler particles can be clearly analyzed.

**Description of the Related Art**

In general, rubber compounds used in rubber products, e.g. tires and the like contain fillers, e.g. carbon black, silica and the like as reinforcing agents. It is generally known in the art that a dispersion of such filler particles in a rubber compound affects characteristics such as strength of the rubber compound. Therefore, it has been desired that the dispersion of filler particles in the rubber compound can be clearly analyzed.

It is therefore an object of the present invention to provide a method for analyzing rubber compound with filler particles in which the dispersion of filler particles in a rubber compound can be clearly analyzed.

**Summary of the invention**

According to the present invention, a method for analyzing rubber compound including a rubber component and filler particles, comprises:

a STEM image acquiring step in which, by the use of a scanning transmission electron microscope (STEM), data of STEM images of the rubber compound are acquired; and

a researching step for researching the STEM images or secondary information based on the originally data of STEM images; wherein

in the STEM image acquiring step, the focal point of the scanning transmission electron microscope is set in a thickness center region of a specimen of the rubber compound.

**Brief Description of the Drawings**

Fig. 1 is a microscopical cross sectional view of a simplified example of a rubber compound.

Fig. 2 is a flow chart for explaining a method for analyzing rubber compound as an embodiment of the present invention.

Fig. 3 is a diagram showing a scanning transmission electron microscope used in the method according to the present invention.

Fig. 4 is a diagram showing a scattering angle limiting aperture for dark-field image.

Fig. 5 is a diagram for explaining a device for tilting the specimen.

Fig. 6(a) is a schematic sectional view of the specimen for explaining the position of the focal point, taken along a section including the electron beam axis which is perpendicular to the incidence plane.

Fig. 6(b) is a schematic sectional view of the specimen for explaining the position of the focal point, taken along a section including the electron beam axis which inclines with respect to the incidence plane.

Fig. 7 is a schematic sectional view for explaining relationships among the depth of field of a scanning transmission electron microscope, a position of the focal point of the microscope, and the thickness of a specimen.

Fig. 8 is a perspective view produced from a dataset of the three-dimensional structure of a rubber compound.

Fig. 9(a) is a diagram showing a small part of a finite element model of a simplified example of a rubber compound.

Fig. 9(b) is a closeup thereof.

Fig. 10(a) is a diagram for explaining a subdivisional region in the finite element model of a simplified example of a rubber compound.

Fig. 10(b) is a closeup thereof.

Fig. 11 is a perspective view of a three-dimensional finite element model of a simplified example of a rubber compound.

Fig. 12(a) is a diagram showing a three-dimensional regular element of a rubber compound.

Fig. 12(b) is a diagram showing the one regular element of the subdivisional region is divided into 7 elements.

Fig. 13 shows slice images at an upper position and a lower position of a specimen of a rubber compound obtained under the after-mentioned different test conditions 1 and 2.

Fig. 14 is a cross sectional view of the specimen for explaining the upper position and lower position referred to in Fig. 11.

Fig. 15 is a graph showing stress-strain relationships as simulation results and actual measurements.

## Detailed Description

Embodiments of the present invention will now be described in detail in conjunction with accompanying drawings.

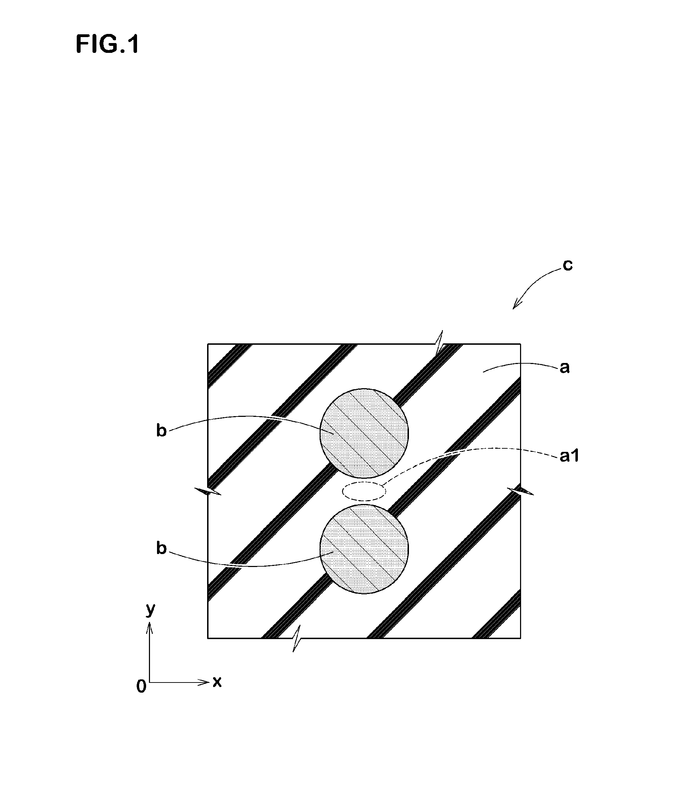

As shown in Fig. 1, the analysis object in this embodiment is a rubber compound (c) which comprises a rubber component (a) as the matrix rubber, and filler particles (b) dispersed in the matrix rubber. As for the suitable method for analyzing the rubber compound (c), the method in this embodiment includes a computerized simulation of the rubber compound (c).

The rubber component (a) can be, for example, natural rubber (NR), isoprene rubber (IR), butyl rubber (IIR), butadiene rubber (BR), styrene butadiene rubber (SBR), styrene isoprene butadiene rubber (SIBR), ethylene-propylene-diene rubber (EPDM), chloroprene rubber (CR), acrylonitrile butadiene rubber (NBR) and the like.

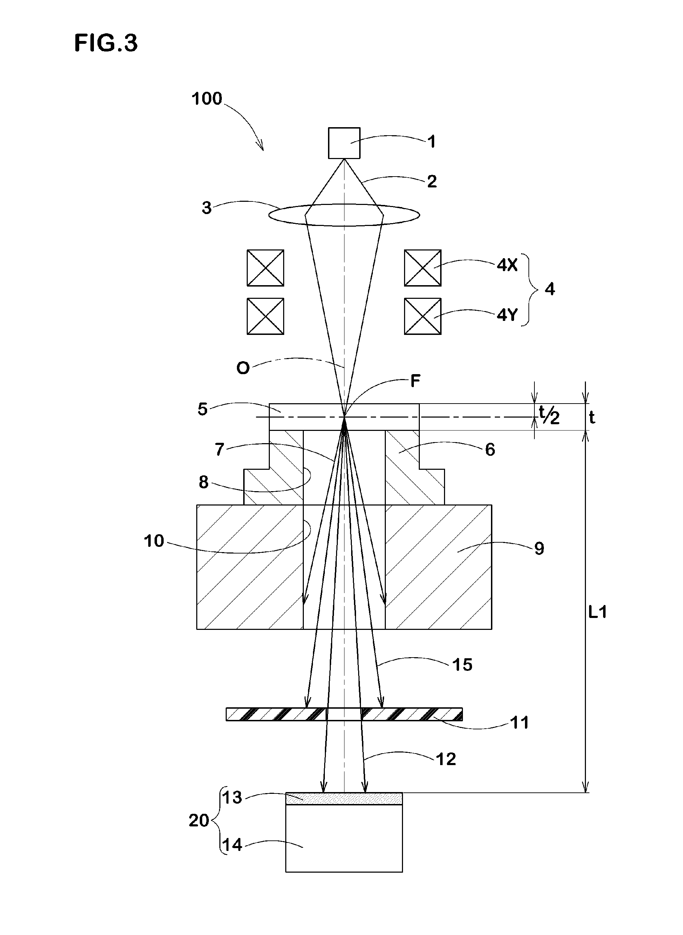

The filler (b) can be carbon black, silica, clay, talc, magnesium carbonate, magnesium hydroxide and the like of course the rubber component (a) and filler (b) are not limited to these examples. Further, various additives, e.g. sulfur, vulcanization accelerator and the like may be added in the rubber compound (c). In this embodiment, a slice of the rubber compound with a constant thickness (t) is used as a specimen 5 (shown in Fig. 3).

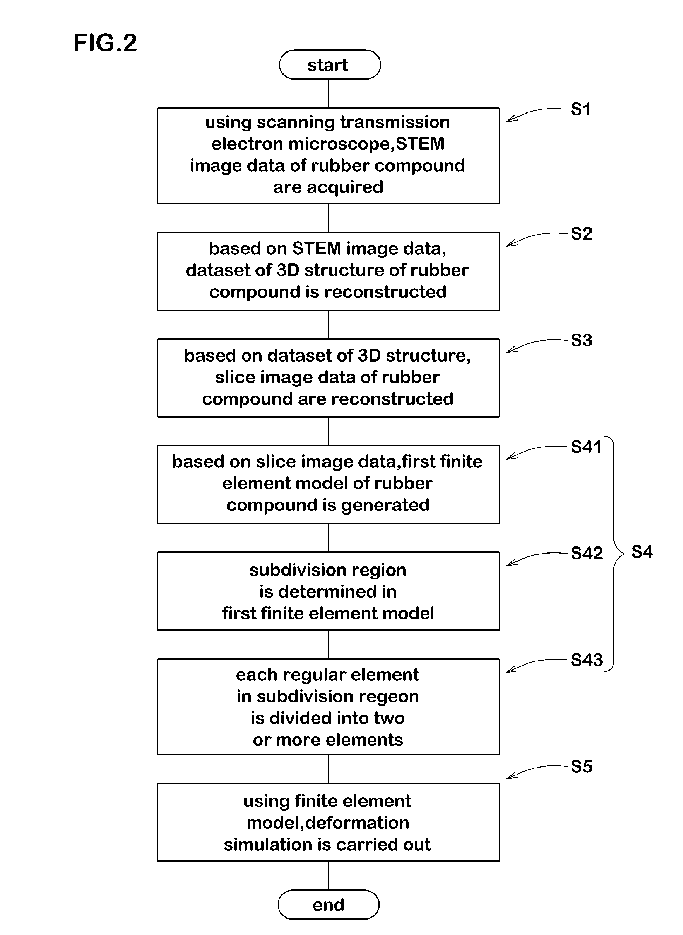

A flow chart implementing the analyzing method as an embodiment of the present invention is shown in Fig. 2. This method comprises the following steps S1-S5.

** STEM image acquiring step S1

In this step S1, by the use of the scanning transmission electron microscope (STEM) 100, STEM images of the rubber compound (c) are acquired.

As shown in Fig.3, the scanning transmission electron microscope (STEM) 100 comprises: an electron gun 1 directed perpendicularly to a horizontal plane and capable of emitting electrons downward; a focusing lens 3 for focusing the electrons as an electron beam 2 on the specimen 5 of the rubber compound (c); scanning coils 4 including an X-direction scanning coil 4X and a Y-direction scanning coil 4Y for deflecting the electron beam 2 in the X-direction and Y-direction to scan the specimen 5; a specimen holder 6 for holding the specimen 5; and a specimen stage 9 on which the specimen holder 6 is detachably fixed.

In a central portion of the specimen holder 6, an electron beam pass-through hole 8 is formed along the central axis (o) of the scanning transmission electron microscope 100 so that transmission electrons 7 which penetrate through the specimen 5 can pass through the hole 8.

In a central portion of the specimen stage 9, an electron beam pass-through hole 10 is formed along the central axis (o) and continuously from the electron beam pass-through hole 8 so that the transmission electrons 7 can pass through the hole 10.

The microscope 100 is further provided on the downstream side of the specimen stage 9 with a scattering angle limiting aperture 11 in order to limit the passing-through of the transmission electrons 7.

Further, on the downstream side of the scattering angle limiting aperture 11, there is disposed a detector 20 for the transmission electrons 15 passing through the aperture 11. The detector 20 comprises a scintillator 13 and a photoelectron multiplier tube 14.

The scintillator 13 reemits the energy of the incident electrons 12 passing though the aperture 11, in the form of light.

The photoelectron multiplier tube 14 converts the incident light from the scintillator 13 to an electronic signal. Incidentally, the above-mentioned specimen stage 9, scattering angle limiting aperture 11, scintillator 13 and photoelectron multiplier tube 14 are arranged in a specimen room of a casing main body (not shown) of the microscope system 100.

The microscope 100 is used to acquire STEM images of the rubber compound (c) as follows. First, the specimen holder 6 with the specimen 5 is attached to the specimen stage 9 by an operating personnel.

Next, the electron beam 2 emitted from the electron gun 1 and accelerated by an accelerator (not shown) and focused by the focusing lens 3 is scanned on the specimen 5 by the X-direction and Y-direction scanning coils 4X and 4Y. The electrons 7, which penetrate through the specimen 5 with or without scattered, go out from the lower surface of the specimen 5.

The outgoing electrons 7 travel through the holes 8 and 10 to the scattering angle limiting aperture 11 which allows the electrons having particular scattering angles to pass through it.

The electrons 12 passing through the scattering angle limiting aperture 11 go into the scintillator 13, and thereby the energy of the incident electrons 12 is reemitted in the form of light. Then by the accompanying photoelectron multiplier tube 14, the light is converted to an electronic signal. The electrical signal is amplified and converted to digital data by an amplifier and A/D converter (not shown). The digital data are transmitted to a display (not shown) in which, according to the transmitted signal, brightness modulation is made, and an electron beam transmission image reflecting the internal structure of the specimen 5 is displayed as a STEM image, and at the same time, the digital data are stored in a memory of the computer. Thus, a plurality of STEM images corresponding to the scan positions are acquired as the STEM images' dataset.

The intensity and scattering angle of the outgoing electrons 7 are varied depending on the internal state, thickness and/or atomic species of the specimen 5. The scattering angle is also varied by the accelerating voltage. For example, if the accelerating voltage is decreased, the electrons are scattered more in the specimen 5, and the scattering angle or outgoing angle from the lower surface of the specimen 5 with respect to the central axis (o) is increased.

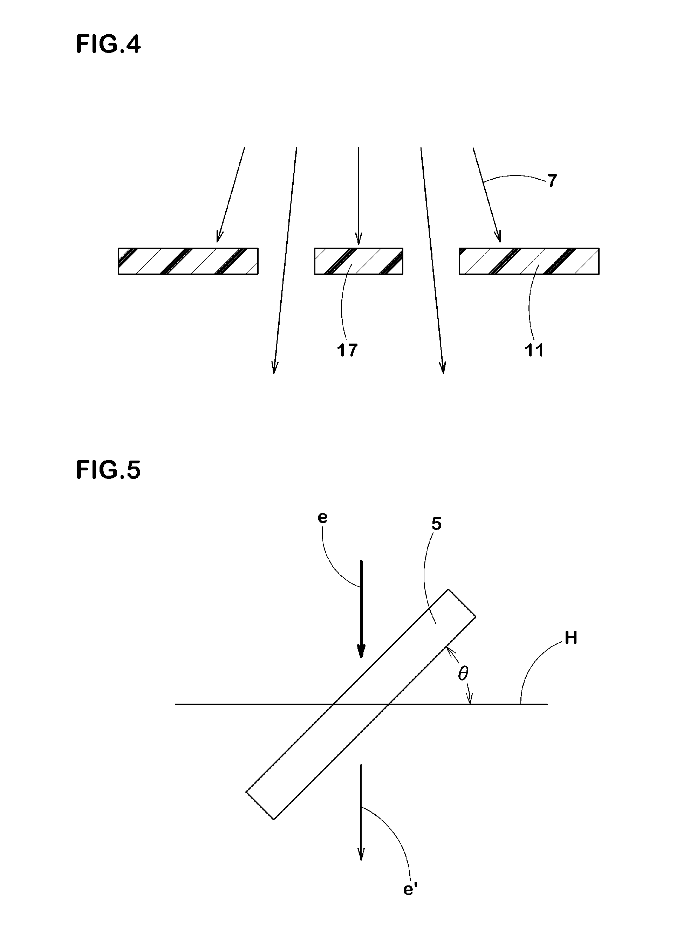

As shown in Fig. 4, the scattering angle limiting aperture 11 may be provided in its center with a masking shield 17 for further limiting the passing of the electrons 7 although the example shown in Fig. 3 is not provided with such masking shield. In general, the electron beam transmission image becomes a bright-field image when the additional masking shield is not used, but it becomes a dark-field image if the masking shield is used,

In order to create a clear image, the camera length L1 namely the distance between the specimen 5 and the scintillator 13 is preferably set in a range of from 8 to 150 cm.

The accelerating voltage for the electron beam may be set in a range of 100 to 3000 kv depending on the specimen 5.

In the STEM image acquiring step S1 in this embodiment, a plurality of images of the rubber compound (c) are took from different angles with respect to the central axis (o) of the scanning transmission electron microscope 100. For this purpose, the microscope 100 is provided with a specimen tilting device (not shown) to tilt the specimen 5 with respect to the central axis (o) with this, as shown in Fig. 5, the specimen 5 can be held at different tilt angles $\theta$ with respect to a horizontal plane H. In this embodiment, the computer outputs a control signal to the specimen tilting device and according thereto the device tilts the specimen 5 at a specific angle $\theta$.

The variable range of the tilt angle $\theta$ of the specimen 5 is -90 to +90 degrees, preferably -70 to +70 degrees. However, if the specimen is a round bar of the rubber compound, the variable range of the angle $\theta$ may be -180 to +180 degrees.

Firstly, the specimen 5 is tilted at a measuring start angle $\theta$ and in this tilted state, the STEM images or the dataset thereof are acquired as explained above. Then, until a measuring stop angle $\theta$, the process of changing the tilt angle of the specimen 5 and acquiring the dataset of the STEM images of the specimen 5 at that tilt angle are repeated at a step in a range of from 0.5 to 4 degrees, preferably 1 to 2 degrees in order to obtain the after-mentioned slice images clearly and efficiently.

Thereby, the dataset of the STEM images of the specimen inclined at different tilt angles are obtained. Incidentally, the measuring start angle $\theta$ and measuring stop angle $\theta$ can be arbitrarily set on the microscope by using a controller. In this embodiment, the measuring start angle $\theta$ is +70 degrees, and the measuring stop angle $\theta$ is -70 degrees.

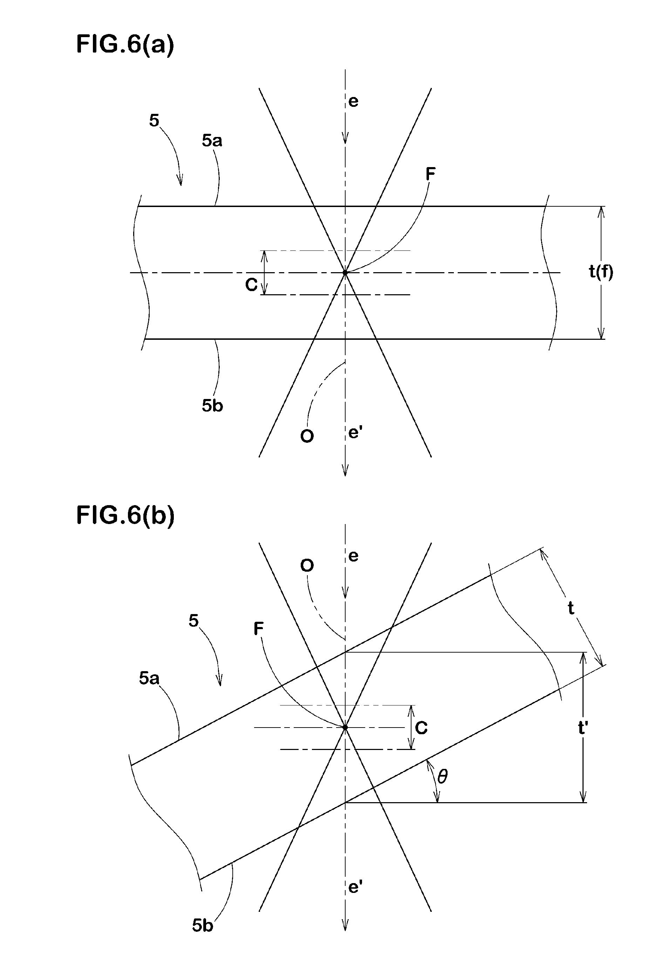

In this embodiment, the focal point F of the electron beam (e) is set in a thickness center region C of the specimen 5 as shown in Fig. 6(a).

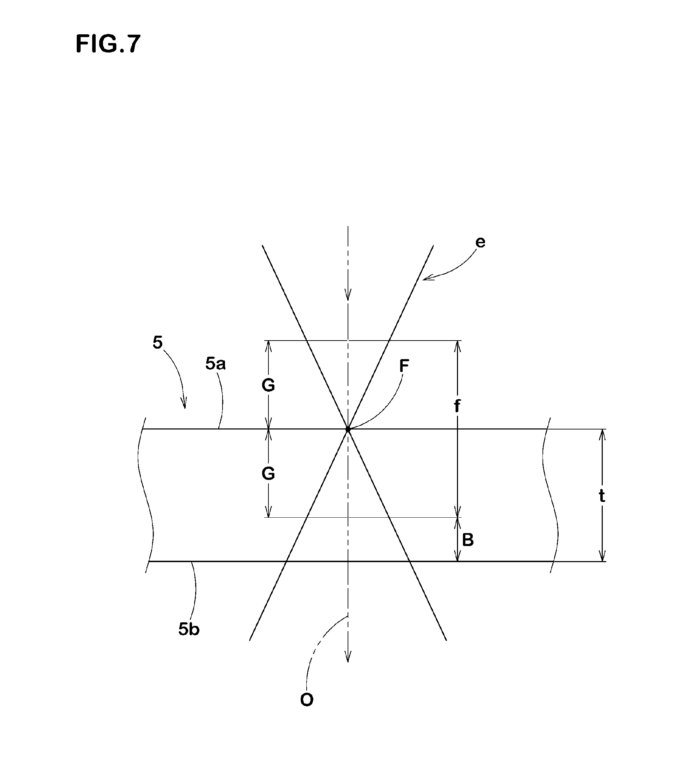

when the focal point F of the electron beam (e) is set at the upper surface 5a of the specimen 5, as shown in Fig.7, there is a possibility that a clear image cannot be obtained in the vicinity of the lower surface 5b of the specimen 5. For instance, as shown in Fig. 7, if the thickness (t) of the specimen 5 is 1000 nm, the depth (f) of field of the microscope is 1200 nm (or +/-600 nm), and the focal point F is set at the surface 5a of the specimen 5, then a lower part B having 400 nm thickness of the specimen 5 is outside the depth of field, and accordingly, a clear image of such part B can not be obtained. This problem is liable to occur with increase in the thickness (t).

on the other hand, when the focal point F of the electron beam (e) is set in the thickness center region C of the specimen 5 as shown in Fig. 6(a), the range on the specimen 5 in which a clear image can be obtained becomes increased. It is desirable that the depth (f) of field can completely overlaps or encompass the thickness (t) of the specimen 5.

In Fig. 6(a), the upper surface 5a and the lower surface 5b of the specimen 5 are perpendicular to the electron beam axis (namely, the incidence angle is equal to 90 deg.). In Fig. 6(b), the upper surface 5a and the lower surface 5b of the specimen 5 are inclined with respect to the electron beam axis (namely, the incidence angle is not equal to 90 deg.). Under such inclined state, the thickness of the specimen 5 measured along the electron beam axis is referred to as apparent thickness (t') in contrast to the real thickness (t) measured perpendicularly to the upper surface 5a.

From the real thickness (t), the tilt angle $\theta$ of the specimen 5, and the apparent thickness (t') can be obtained as follows:

```
apparent thickness (t') = real thickness (t)/ cosθ.
```

Here, θ is the tilt angle of the specimen 5 with respect to the horizontal plane, as shown in Fig. 6(b).

It is desirable that the central region C within which the focal point F is set, ranges 30 %, preferably 20 %, more preferably 10 % of the real/apparent thickness. The central region C may be off-centered, but preferably it is centered on the center of the real/apparent thickness.

The real thickness (t) may be less than 200 nm as usual, but it is preferably set in a range of from 200 to 1500 nm, more preferably 500 to 1000 nm. By increasing the thickness (t) near to 1500 nm, the dispersion of the filler particles including a compact cluster having a diameter of 200 nm or more can be accurately simulated. Incidentally, the focal point F is adjusted by the focusing lens 3 and/or specimen stage 9 by the use of a focal point adjuster of the microscope system 100.

** Three-dimensional structure reconstruction step S2

In this step S2, from the dataset of the STEM images acquired in the step S1, a three-dimensional structure of the rubber compound is reconstructed as numerical data (hereinafter the "3D dataset") by executing a tomographic method with the computer, and the 3D dataset is stored in a memory of the computer.

As the dataset of the STEM images, those acquired by changing the tilt angle of the specimen 5 as explained above can be preferably used. But, it is also possible to use those acquired by not changing the tilt angle, namely acquired at a single tilt angle of the specimen 5 preferably zero degree with respect to the horizontal plane.

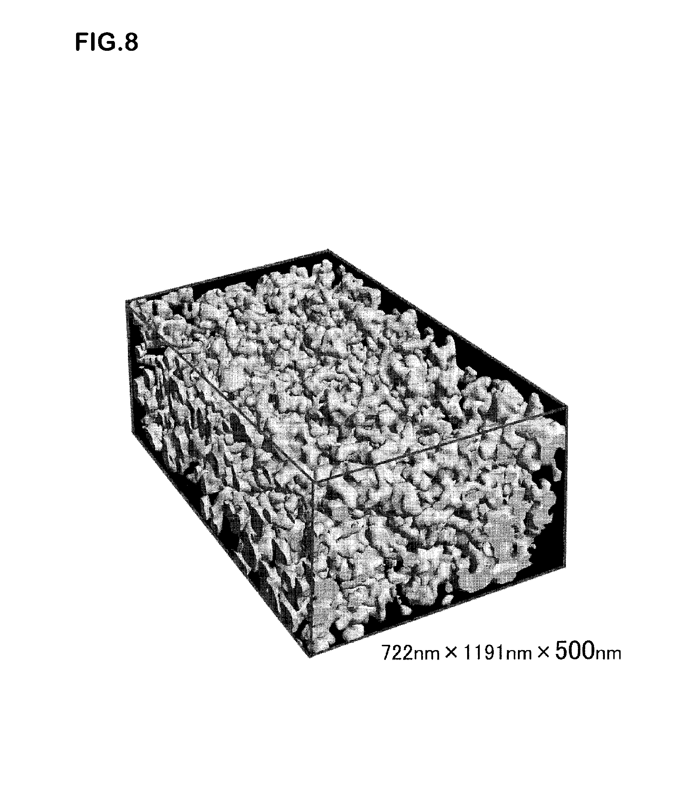

From the 3D dataset, the computer can create and output various images as visual information as well as numerical data. Fig. 8 shows such created image which is a perspective view of the filler particles dispersed in the rubber compound.

** Slice image acquiring step S3

In this step S3, from the reconstructed 3D dataset of the three-dimensional structure of the rubber compound, slice images of the rubber compound (c) taken along predetermined sections of the rubber compound (c) are reconstructed by the computer as numerical data (herein after the "slice image dataset"), and the slice image dataset is stored in a memory of the computer. The above-mentioned predetermined sections of the rubber compound can be arbitrarily determined according to the coordinate system (Cartesian or polar or cylindrical) employed in the subsequent step S4.

** Finite element model generating step S4

In this step S4, a finite element model of the rubber compound (c) is generated based on the slice image of the rubber compound (c). Step S4 further comprises a first step S41, a second step S42 and a third step S43.

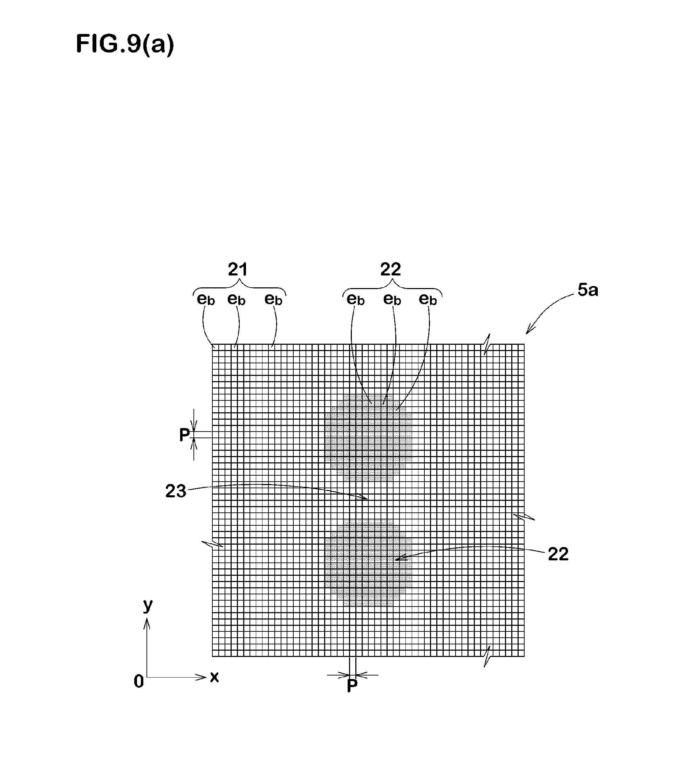

In the first step S41, a first finite element model 5a of the rubber compound is set using only regular elements each with the same shape, as shown in Fig. 9(a). In this step S41, the slice image is subjected to an image processing to divide the entire region of the slice image into a domain of the rubber component (a), a domain of the filler particle (b) and/or a domain of other component if any. As to the image processing method, a known method can be used in which, based on threshold levels of gray level, micro regions of the slice image are each identified whether it is a rubber domain or a filler domain (or other domain if any).

Next, at least one slice image including at least two domains of the rubber component (a) and filler particles (b) is divided by using only regular elements eb each with the same shape, to generate a first finite element model of the rubber compound (c).

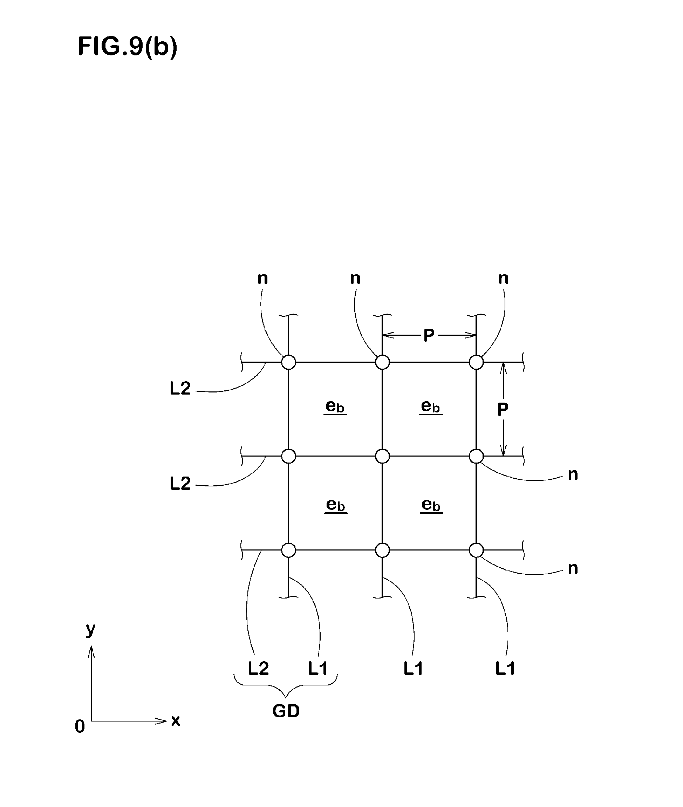

Fig. 9(a) shows a small part of the first finite element model 5a taken along a corresponding slice image of a simplified example of the rubber compound (c), and Fig. 9(b) shows a closeup thereof. As shown in Fig. 9(b), each regular element eb is defined as a mesh on a regular grid with boundary GD (L1 and L2) at even pitches P in the x-axis direction, y-axis direction. In this embodiment, each regular element eb has a square shape with four node points (n) which are located on intersections between lines L1 and L2.

As shown in Fig. 9(a), the first finite element model 5a of the rubber compound comprises a domain 21 of the rubber component and a plurality of domains 22 of the filler particles. In this embodiment, shadowed areas indicate the filler particle domains 22.

In the filler particle domain 22, the filler particle is discretized into a finite number of regular elements eb. In the rubber component domain 21, the rubber component is also discretized into a finite number of regular elements eb.

In the discretization process, for example, with the computer, the regular grid is defined and superimposed onto the image-processed slice image or images, and for each regular element eb of the grid, it is computed which one of the rubber component and filler particle has the highest proportion of area or volume in the concerned regular element eb. Then, the regular element eb is defined as being one with the highest proportion. Namely, the computer determines whether each regular element eb belongs to the rubber component or the filler particle. By employing a structured regular grid and regular elements, it is possible to generate the rubber compound model 5a rapidly. Further, since the discretization process of the rubber compound is based on the slice image or images accurately created from the 3D dataset of the rubber compound, a precise model of the rubber compound can be obtained.

Also, information is defined on each regular element eb, which is required for simulations or numerical analysis conducted by the use of a numerical analysis method, e.g. a finite element method or the like. Such information includes at least indexes and coordinate values of node points (n) of each regular element eb.

Further, on each element eb, material characteristics (materials properties) of the part of the rubber compound which part is represented by the concerned element are defined. Specifically, on each of the elements eb of the rubber component domain 21 and filler particle domains 22, material constants corresponding to physical properties of the rubber component or filler are defined and stored in a memory of the computer as numerical data.

Next, in the second step S42, a subdivisional region 23 is determined in the first finite element model 5a at least partially.

The subdivisional region 23 is a region where small elements smaller than regular elements should be employed to make it possible to research the deformation behavior thereof in more detail. By using the subdivisional region 23 in the first finite element model 5a at least partially, accurate computation results may be obtained therefrom. In view of above, the subdivisional region 23 is preferably determined on the location where accurate computation results are required.

As shown in Fig. 1, in the rubber compound c with filler particles, a large strain and stress especially tend to be generated in the rubber part b1 between two filler particles b. In this embodiment, the subdivisional region 23 is determined as the region including the rubber part b1 at least partially.

The scope of the subdivisional region 23 may be designated by an operating personnel using input devices such as the keyboards or the mouse. In order to identify which regular elements have been designated for the subdivisional region, information is added to the memory in the computer 1.

Further, the subdivisional region 23 may be determined as follows:

Firstly, by using the first finite element model 5a of the rubber compound, a simulation of deformation of the rubber compound is carried out under given conditions;
Next, a large deformed region where the largest strain or stress is generated in the first finite element model 5a is determined based on the simulation results; and
Finally, the subdivisional region 23 is determined as the region which includes the large deformed region at least partially.

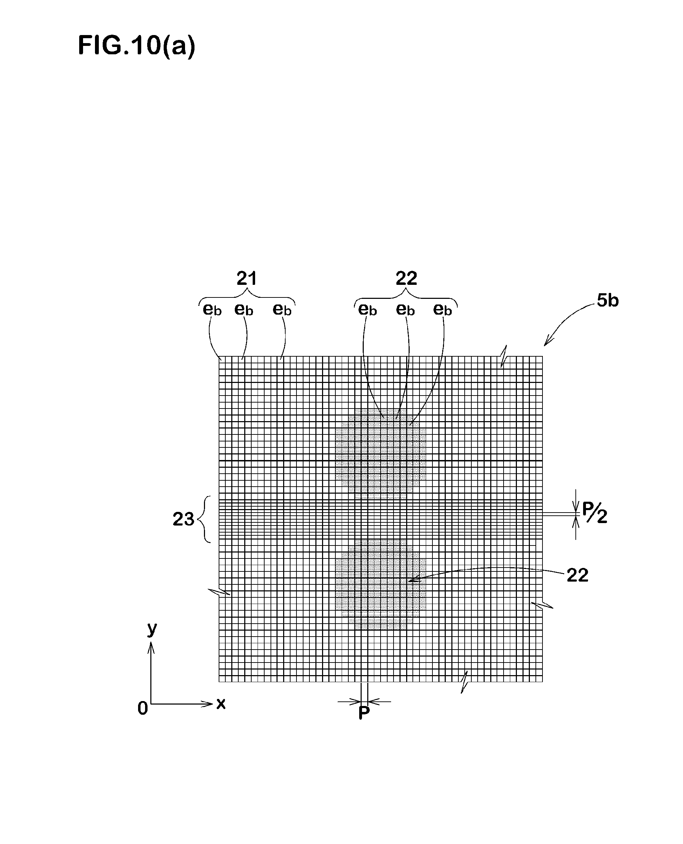

In the third step S43, each regular element included in the subdivisional region 23 is divided into two or more elements to generate the finite element model 5b (shown in Fig. 10(a)) of the rubber compound is carried out. In the third step S43, pitches P of longitudinal lines L1 and/or lateral lines L2 on the regular grid passing through the subdivisional region 23 are changed so that each regular element eb included in the subdivisional region 23 changes small.

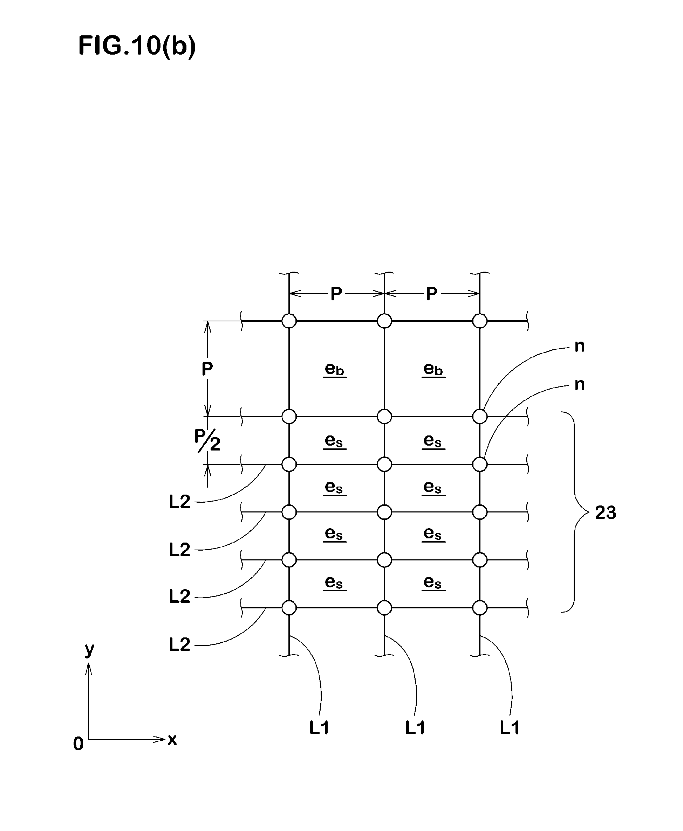

As shown in Fig. 10(b), pitches of the lateral lines L2 passing through the subdivisional region 23 is changed into a half of initial pitch given as the first finite element model 5a of the rubber compound (c), although the pitches of the longitudinal lines L1 is not changed, in this embodiment with this, each regular element eb of the rubber domain 21 between the filler domains 22 is divided into two equal elements as to the y-axis direction. Namely, each regular elements eb in the subdivisional region 23 is divided into the small element es which is a rectangular shape with the same length of x-axis direction and a half length of y-axis compared to the initial regular element eb.

Various ratios for changing the initial pitch P between lines L1 and/or L2 of the regular grid can be employed to make the small elements es in the subdivisional region 23, the ratio is not limited as 0.5. Moreover, the subdividing process may be repeated frequently until necessary resolution for the subdivisional region 23 is obtained.

** Simulation step S5

In this step S5, using the finite element model 5b of the rubber compound, a simulation of deformation of the rubber compound is carried out under given conditions. For this purpose, a known method, e.g. homogeneization method (asymptotic expansion homogeneization method) or the like can be employed.

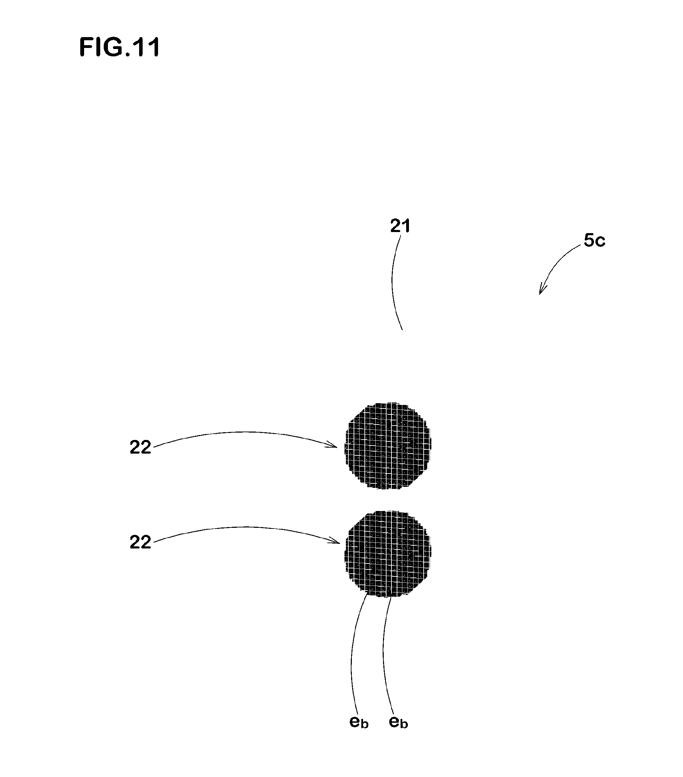

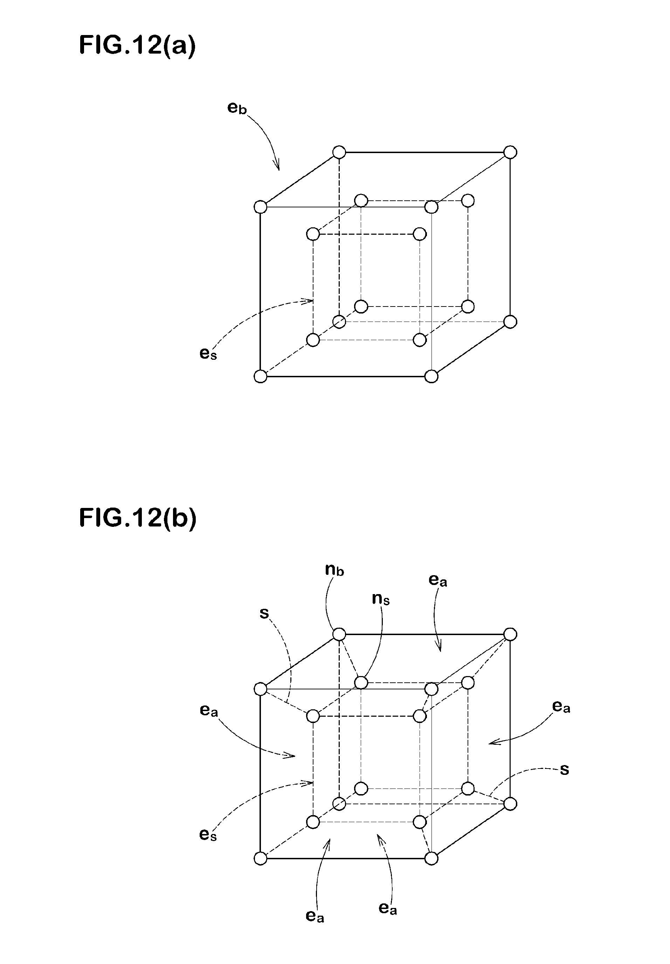

In this embodiment, using one slice image, a two-dimensional finite element model 5b can be generated. As shown in Fig. 11, however, a three-dimensional finite element model 5c can be generated Using a plurality of slice images. In this three-dimensional finite element model 5c, rectangular solid elements may be employed as the regular elements eb. As shown in Figs. 12(a) and 12(b), for example, the subdividing process to the three-dimensional finite element model 5c may be done as follows:

As shown in Fig. 12(a), a small element es of a rectangular solid shape smaller than the regular element eb is defined within each regular element eb of a rectangular solid shape in the subdivisional region 23 so that each center of gravities thereof coincides each other: and

Next, as shown in Fig. 12(b), each node point ns of the small elements eb is associated with each corresponding node point nb of the regular elements es using a beam (s).

With this, the regular elements eb is divided into one small center element es having the rectangular solid shape, and six elements (ea) having quadrangular pyramid shapes surrounding the center element es.

The present invention is more specifically described and explained by means of the following Examples and References. It is to be understood that the present invention is not limited to these Examples.

Comparison Tests

In order to confirm the advantage of the method according to the invention, comparison tests were conducted.

Firstly, an explanation is given about the STEM image acquiring step S1 and three-dimensional structure reconstruction step S2. Equipments and materials used are as follows.

[Scanning transmission electron microscope]

JEOL Ltd. JEM-2100F

[Microtome]

Leica Ultramicrotome EM UC6

[Rubber materials]

100 parts by mass of SBR (Sumitomo Chemical Company, Limited: SBR1502)

53.2 parts by mass of silica (Rhodia Japan Ltd.: 115Gr)

4.4 parts by mass of silane coupling agent (Si69)

0.5 parts by mass of sulfur (Tsurumi Chemical. Co. Ltd.: Powdered sulfur)

1 parts by mass of vulcanization accelerator A (Ouchi Shinko Chemical Industrial Co., Ltd.: NOCCELER NS)

1 parts by mass of vulcanization accelerator B (Ouchi Shinko Chemical Industrial Co., Ltd.: NOCCELER D)

Using a banbury mixer, the materials except for the sulfur and vulcanization accelerators were kneaded for four minutes at 160 degrees C. Then, the kneaded materials to which the sulfur and vulcanization accelerators were added was further kneaded by the use of a open roll kneader for two minutes at 100 degrees C, and a raw rubber compound was prepared. The raw rubber compound was vulcanized for thirty minutes at 175 degrees C.

The vulcanized rubber was sliced by using the ultramicrotome, and a specimen with a thickness of 500 nm was prepared.

Using the STEM mode (camera length L1 = 150 cm, accelerating voltage = 200 kv) of the microscope JEM-2100F, STEM images of the specimen were acquired by changing the tilt angle of the specimen from -60 to +60 degrees at a step of 1 degree, wherein, in the case of test condition 1, the focal point was set at the thickness center of the specimen, and in the case of test condition 2, the focal point was set at the upper surface of the specimen.

From the data of the STEM images obtained under each test condition, a 3D dataset of a three-dimensional structure of the rubber compound was reconstructed.

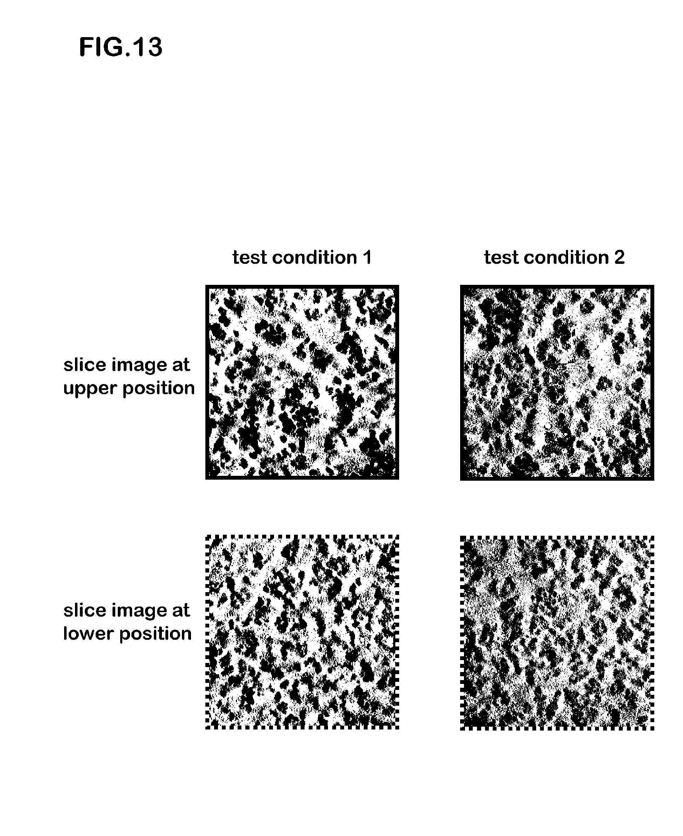

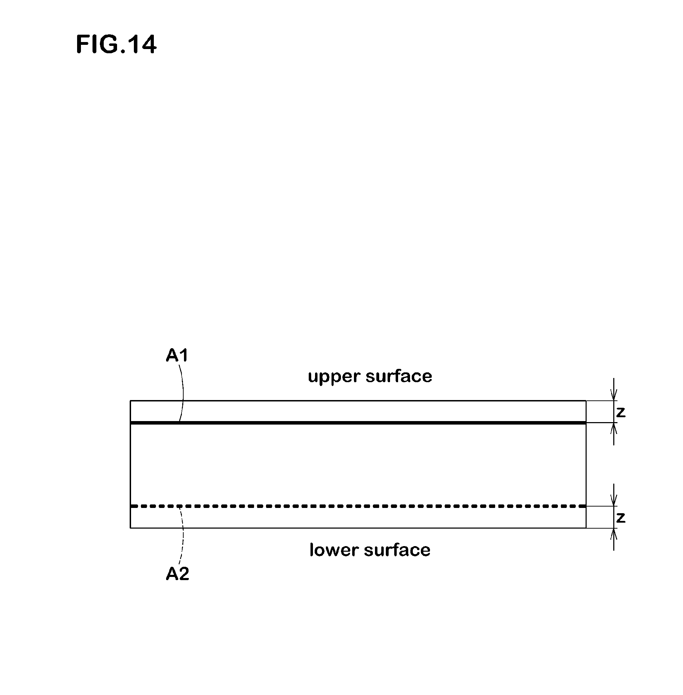

Fig. 13 shows slice images at the upper position A1 and lower position A2 of each of three-dimensional structures created from the 3D dataset. The upper and lower positions A1 and A2 are at 40 nm from the upper and lower surfaces, respectively, as shown in Fig. 14. As shown, in the test condition 2, the image at the lower position became unclear. However, in the test condition 1, the image at the lower position as well as the image at the upper position became clear. Also, the above-mentioned perspective view shown in Fig. 8 was created from the 3D dataset obtained under the test condition 1.

Based on the slice image at the lower position A2 obtained in the test condition 1, two kinds of two-dimensional rubber compound models were defined as Examples 1 and 2. More specifically, the Example 1 was defined using only regular elements each having square shape. Example 2 was defined using regular elements having square shape, and small elements which were defined between a pair of filler particle domains. Each small element had a length of y-axis direction being a half of that of the regular element, and a length of x-axis direction being the same of the regular element.

Then, using these rubber compound models, a simulation for tensile deformation was carried out to obtain the stress-strain relationship under the following conditions.

Maximum tensile strain: 3 mm

Tensile strain rate: 100 mm/min

Macroscopic region; 20 mm X 20 mm

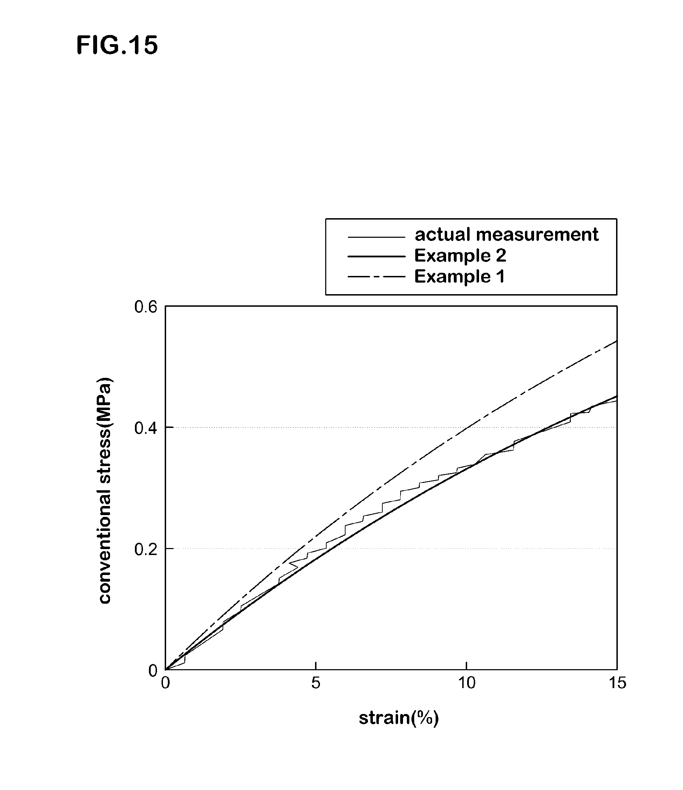

The simulation results are shown in Fig. 15 together with the actual measurements obtained from the rubber compound. As shown in Fig. 15, the simulation result according to Example 2 has a high correlation with the actual measurements.

**Claims**

1. A method for analyzing rubber compound including a rubber component and filler particles, comprising:

   a STEM image acquiring step in which, by the use of a scanning transmission electron microscope (STEM), data of STEM images of the rubber compound are acquired; and
   a researching step for researching the STEM images or secondary information based on the originally data of STEM images; wherein
   in the STEM image acquiring step, the focal point of the scanning transmission electron microscope is set in a thickness center region of a specimen of the rubber compound.

2. The method according to claim 1, wherein
   in the STEM image acquiring step, the specimen of the rubber compound is tilted with respect to the central axis of the scanning transmission electron microscope and the STEM images are took at different tilt angles of the specimen of the rubber compound, and
   the researching step comprises a three-dimensional structure reconstruction step in which, based on the data of the STEM images, a dataset of a three-dimensional structure of the rubber compound is reconstructed.

3. The method according to claim 1 or 2, wherein
   the focal point of the scanning transmission electron microscope is set in a thickness center region of the specimen of the rubber compound based on an apparent thickness measured along the direction of the electron beam axis across the specimen of the rubber compound.

4. The method according to claim 1 or 2, wherein
   the thickness of the specimen of the rubber compound is 200 to 1500 nm.

5. The method according to claim 1 or 2, wherein
   a distance between the specimen of the rubber compound and a detector for the transmission electrons of the scanning transmission electron microscope is 8 to 150 cm.

6. The method according to claim 2, wherein
   the researching step further comprises:

   a finite element model generating step in which, based on the dataset of the three-dimensional structure of the rubber compound, a finite element model of the rubber compound is generated, so that the finite element model comprises a domain of the rubber component divided into a finite number of elements, and domains of the filler particles each divided into a finite number of elements; and
   a simulation step in which, based on the finite element model, a simulation of deformation of the rubber compound is carried out.

7. The method according to claim 6, wherein
   the finite element model generating step comprises:

   a first step in which a first finite element model of the rubber compound is set using only regular elements each with the same shape;
   a second step in which a subdivisionalal region is determined in the first finite element model at least partially; and
   a third step in which each element of the subdivisional region is divided into two or more elements to generate the finite element model of the rubber compound.

FIG.1

## FIG.2

```
           ┌─────────────┐
           │    start    │
           └──────┬──────┘
                  │
  ┌───────────────┴───────────────┐
  │   using scanning transmission  │ ←── S1
  │    electron microscope,STEM    │
  │  image data of rubber compound │
  │          are acquired          │
  └───────────────┬───────────────┘
                  │
  ┌───────────────┴───────────────┐
  │      based on STEM image data, │ ←── S2
  │  dataset of 3D structure of rubber │
  │     compound is reconstructed   │
  └───────────────┬───────────────┘
                  │
  ┌───────────────┴───────────────┐
  │  based on dataset of 3D structure, │ ←── S3
  │      slice image data of rubber │
  │    compound are reconstructed   │
  └───────────────┬───────────────┘
                  │
  ┌───────────────┴───────────────┐
  │  based on slice image data,first finite │ ←── S41
  │      element model of rubber   │
  │      compound is generated      │
  └───────────────┬───────────────┘
                  │
  ┌───────────────┴───────────────┐
  │       subdivision region        │ ←── S42    S4
  │        is determined in         │
  │    first finite element model   │
  └───────────────┬───────────────┘
                  │
  ┌───────────────┴───────────────┐
  │      each regular element       │ ←── S43
  │     in subdivision regeon       │
  │       is divided into two       │
  │       or more elements          │
  └───────────────┬───────────────┘
                  │
  ┌───────────────┴───────────────┐
  │        using finite element     │ ←── S5
  │       model,deformation         │
  │     simulation is carried out   │
  └───────────────┬───────────────┘
                  │
           ┌──────┴──────┐
           │     end     │
           └─────────────┘
```

10

# FIG.3

FIG.4

FIG.5

# FIG.6(a)

# FIG.6(b)

## FIG.7

FIG.8

722nm × 1191nm × 500nm

# FIG.9(a)

# FIG.9(b)

# FIG.10(a)

# FIG.10(b)

# FIG.11

21

5c

22

22

e_b   e_b

## FIG.12(a)

## FIG.12(b)

## FIG.13

|  | test condition 1 | test condition 2 |
|---|---|---|
| slice image at upper position | | |
| slice image at lower position | | |

# FIG.14

A1

upper surface

z

z

lower surface

A2

## FIG.15

Legend:
- actual measurement
- Example 2
- Example 1

y-axis: conventional stress(MPa) — 0, 0.2, 0.4, 0.6
x-axis: strain(%) — 0, 5, 10, 15